# EUROPÄISCHE PATENTSCHRIFT

(11) **EP 3 838 573 B1**
(45) Veröffentlichungstag und Bekanntmachung des Hinweises auf die Patenterteilung: **19.04.2023**
(21) Anmeldenummer: 20204262.8
(22) Anmeldetag: 28.10.2020
(51) Int. Cl.: B29D 30/06, B29D 30/72, B60C 13/00

(54) **VERFAHREN ZUM ERSTELLEN EINER GRAVUR AUF DER INNENFLÄCHE EINES FORMTEILES EINER VULKANISATIONSFORM EINES FAHRZEUGLUFTREIFENS**
METHOD FOR PRODUCING AN ENGRAVING ON THE INNER SURFACE OF A MOULDING OF A VULCANISATION MOULD OF A PNEUMATIC VEHICLE TYRE
PROCÉDÉ DE GÉNÉRATION D'UNE GRAVURE SUR LA SURFACE INTÉRIEURE D'UNE PIÈCE MOULÉE D'UN MOULE DE VULCANISATION D'UN PNEUMATIQUE DE VÉHICULE

(30) Priorität: 16.12.2019 DE 102019219668
(43) Veröffentlichungstag der Anmeldung: 23.06.2021
(73) Patentinhaber: Continental Reifen Deutschland GmbH, 30165 Hannover (DE)
(72) Erfinder: Rittweger, Stefan, 30419 Hannover (DE)
(74) Vertreter: Continental Corporation

(56) Entgegenhaltungen:
- WO-A1-2017/025207
- WO-A1-2019/069487
- DE-A1-102018 203 572

## Beschreibung

Die Erfindung betrifft ein Verfahren zum Erstellen einer Gravur mittels Laser auf der Innenfläche eines Formteiles einer Vulkanisationsform eines Fahrzeugluftreifens auf Basis einer digitalen Rastergrafik aus Pixeln mit einer Vielzahl von, insbesondere zumindest 256, unterschiedlichen Graustufen, wobei die lokale Laserenergie mit den Graustufen der Pixel aus der Rastergrafik korreliert, mit folgenden nacheinander und gegebenenfalls auch parallel zueinander ablaufenden Schritten:
a. Abtasten der digitalen Rastergrafik zur Ermittlung der Graustufe jedes Pixels,
b. Gravieren der Innenfläche des Formteils.

Es ist üblich, auf der Außenfläche von Fahrzeugluftreifen, insbesondere auf Seitenwänden, Flächenelemente mit einer Struktur, beispielsweise einer Schraffur, auszubilden, welche vorrangig die Aufgabe hat, einen Kontrast, insbesondere zu unstrukturierten Flächenbereichen der Seitenwände zu schaffen, um derart etwa die Erkennbarkeit von auf den Seitenwänden als Struktur ausgebildeten Zeichen, etwa von Designelementen oder Logos, zu verbessern. Flächenelemente mit Kontraststrukturen ermöglichen dies, indem sie - im Vergleich zu glatten Flächen - weniger Licht reflektieren, auftreffendes Licht also "einfangen" und für den Betrachter daher dunkler als glatte Flächenbereiche erscheinen. Ein Verfahren der eingangs genannten Art ist beispielsweise aus der WO 2017/025207 A1 bekannt. Offenbart ist in dieser Druckschrift ferner ein Fahrzeugluftreifen mit zumindest einem flächigen Element auf zumindest einer Seitenwand, welches sich aus einem dreidimensional strukturierten Muster mit einer Vielzahl von übereinstimmend ausgeführten, regelmäßig angeordneten Vertiefungen zusammensetzt. Die Vertiefungen sind im Wesentlichen pyramidenförmig mit einer quadratischen, regulären Pyramide als Basisform, wobei die Vertiefungen in zueinander senkrecht verlaufenden Reihen angeordnet sind und wobei ihre in Draufsicht auf das Muster entlang von Quadraten verlaufenden äußeren Begrenzungskanten muldenförmig in das Gummimaterial der Seitenwand hineinverlaufen. Diese Vertiefungen sollen einen geringen Reflexionsgrad aufweisen, sodass in der Folge der Kontrast gegenüber den glatten Flächenbereichen der Seitenwand erhöht ist. Zur Herstellung des Musters werden feine Strukturen mittels Laser in die Seitenschale der Vulkanisationsform eingraviert. Der Laser arbeitet sich, entsprechend gesteuert gemäß einer Graustufen-Bitmap (Graustufen-Rastergrafik), Schicht für Schicht in das Material der Seitenschale.

Aus der DE 10 2018 203 572 A1 ist ein Polymerprodukt bekannt, welches insbesondere ein Fahrzeugluftreifen ist und welches an seiner äußeren Oberfläche mit einer fotorealistischen Darstellung versehen ist. Die fotorealistische Darstellung ist aus der Kombination einer ungerichteten Textur, welche Erhebungen und Vertiefungen aufweist, und eines Reliefs, welches eine Tiefenkarte der Darstellung ist, gebildet. Die Textur und das Relief sind insbesondere auf der Seitenwand eines Fahrzeugluftreifens ausgebildet, wobei sie gegenüber dem Niveau der Seitenwand erhöht sind und die Höhe der ungerichteten Textur 200 µm bis 300 µm beträgt. Die Erhebungen der Textur sind säulenartig, weisen halbkugelförmige Oberflächen auf und bilden Texturelemente. Die Vertiefungen der Textur sind in unterschiedlichen Höhen vom Relief ausgefüllt, wobei die Höhe der Füllung die resultierende lokale Graustufe der Darstellung bestimmt. Eine nicht gefüllte Vertiefung ergibt dabei einen schwarzen Farbton.

Zur Erzeugung einer möglichst realitätsnahen, also insbesondere dreidimensional wirkenden Darstellung auf der Außenfläche eines Reifens ist es wichtig, dass die die Darstellung wiedergebende Struktur entsprechende Lichtabsorptions- und Lichtreflexionseigenschaften aufweist. Die bislang bekannten Lösungen sind diesbezüglich verbesserungswürdig.

Der Erfindung liegt daher die Aufgabe zugrunde, auf der Außenfläche von Fahrzeugluftreifen derartige Strukturen ausbilden zu können und einen mit derartigen Strukturen an der Außenfläche versehenen Fahrzeugluftreifen zur Verfügung zu stellen.

Gelöst wird die gestellte Aufgabe erfindungsgemäß dadurch,
dass in Schritt a. als Rastergrafik ein Digitalfoto mit einer Bildgröße von zumindest 1000 × 1000 Pixel verwendet wird,
wobei in Schritt b. die Gravur mit den Graustufen der Pixel des Digitalfotos derart korreliert, dass diese als ungleichmäßige, die Graustufen abbildende Berg- und Tal-Kontraststruktur auf der Innenfläche des Formteils wiedergegeben wird.

Durch das Verfahren gemäß der Erfindung lassen sich beliebige Rastergrafiken besonders detailgetreu auf die Innenfläche eines Formteiles übertragen. Der in der entsprechenden Vulkanisationsform vulkanisierte Reifen enthält auf seiner Außenfläche zumindest eine insbesondere bildliche Darstellung als Struktur aus unregelmäßig geformten und angeordneten Vertiefungen und Erhebungen, wobei der Rauheitswert der Struktur derart variiert, dass, bedingt durch ebenfalls variierende Lichtabsorptions- und Lichtreflexionseigenschaften, die Darstellung ein besonders realitätsnahes und detailgetreue Abbild des zugrundeliegenden "Bildes" ist.

In Schritt b lässt sich die Gravur mittels Laser besonders detailgetreu erstellen, da die lokale Laserenergie mit den Graustufen der Pixel der Rastergrafik korreliert.

In Schritt a des Verfahrens wird als Rastergrafik ein Digitalfoto verwendet. Digitalfotos zeichnen sich bekannterweise durch eine hohe Auflösung aus und setzen sich aus einer Vielzahl von Pixeln, denen jeweils eine bestimmte Graustufe zugeordnet ist, zusammen. Dadurch lässt sich die Berg- und Tal-Kontraststruktur besonders detailgetreu am Formelement eingravieren. Besonders vorteilhaft ist dabei, dass die verwendete Rastergrafik eine Bildgröße von zumindest 1.000 × 1.000 Pixel aufweist.

Bevorzugt wird ferner die Gravur von einem konstanten Basisniveau ausgehend erstellt, wobei die Berg- und Tal-Kontraststruktur oberhalb und/oder unterhalb des Basisniveaus ausgebildet wird. Der Bezug auf ein Basisniveau ermöglicht es, die Berg- und Tal-Kontraststruktur besonders gut an die Grauwerte der zugrunde liegenden Rastergrafik anzupassen.

Bevorzugter Weise wird in Schritt b eine Lasergravur mit einer Tiefe von maximal 0,5 mm erstellt.

Für eine möglichst realitätsnahe Ausbildung der Gravur ist es von Vorteil, wenn diese derart erstellt wird, dass ihr lokaler flächenbezogener Rauheitswert gemäß EN ISO 25178 umso größer ist, je dunkler die Graustufe der zugrundeliegenden Rastergrafik ist.

Weitere Merkmale, Vorteile und Einzelheiten der Erfindung werden nun anhand der schematischen Zeichnung, welche Ausführungsbeispiele der Erfindung darstellt, näher beschrieben. Dabei zeigen
Fig. 1 einen Ausschnitt einer Schrägansicht eines Fahrzeugluftreifens,
Fig. 2 eine vergrößerte Draufsicht auf einen Teilbereich einer Innenfläche eines Formteiles einer Vulkanisationsform für einen Fahrzeugluftreifen mit einer Ausführungsvariante der Erfindung,
Fig. 3a und Fig 3b vereinfachte Schnittdarstellungen entlang der Linie III-III der Fig. 2 mit unterschiedlichen Ausführungsvarianten der Erfindung und
Fig. 4 eine beispielhafte fotorealistische Darstellung.

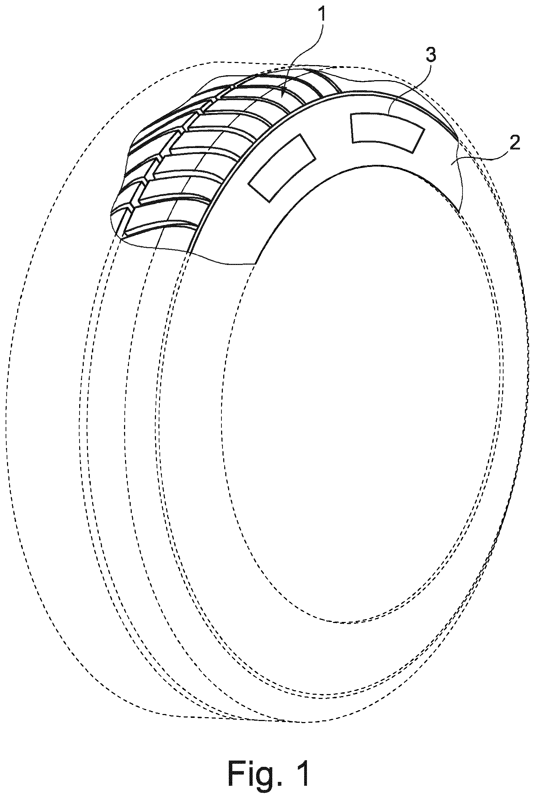

Fig. 1 zeigt einen Fahrzeugluftreifen mit einem profilierten Laufstreifen 1 und Seitenwänden 2. Auf der in Fig. 1 zu sehenden Seitenwand 2 sind zwei Flächenelemente 3 angedeutet, auf welchen jeweils eine nicht gezeigte dreidimensionalen Berg- und Tal-Kontraststruktur ausgebildet ist, die insbesondere eine fotorealistische Darstellung wiedergibt. Der flächenbezogene Rauheitswert gemäß EN ISO 25178 variiert über die Berg- und Tal- Kontraststruktur im Bereich von 0 µm bis 200 µm, insbesondere von 50 µm bis 150 µm, um durch variierende Lichtabsorptions- und Reflexionseigenschaften Grauwerte des der Darstellung zugrundeliegenden Bildes nachzubilden. Die Berg- und Tal- Kontraststruktur wird bei der Vulkanisation des Reifens über den betreffenden Formteil der Vulkanisationsform an der Außenfläche des Reifens eingeprägt.

Die Berg- und Tal- Kontraststruktur wird bei einer Ausführungsvariante am betreffenden Formteil mittels Fräsmaschinen graviert, bei einer weiteren bevorzugten Ausführungsvariante mittels Laser.

Die Gravur wird dabei auf der Basis einer digitalen Rastergrafik (Pixelgrafik) bestehend aus einer rasterförmigen Anordnung von Pixeln (Bildpunkten), denen jeweils eine Graustufe zugeordnet ist, erstellt. Jedem Pixel ist eine Graustufe aus beispielsweise 256 unterschiedlichen Graustufen zugeordnet und es ist jeder Pixel in dieser Graustufe dargestellt. Die 256 möglichen Graustufen resultieren aus der üblichen Farbtiefe von 8 bit (256 = 2⁸). Bevorzugt weist die Rastergrafik eine Bildgröße ("Bildauflösung") von zumindest 1000 × 1000 Pixel auf.

Der digitalen Rastergrafik liegt eine beliebige fotographische Darstellung oder eine sonstige Abbildung zugrunde, insbesondere wird die Rastergrafik aus einem herkömmlichen Schwarz-Weiß-Foto oder aus einem ins Schwarz-Weiße konvertierten Farbfoto, insbesondere einem Digitalfoto, erstellt. Bei der Darstellung kann es sich um eine gegenständliche Darstellung, einen Firmennamen, ein Firmenlogo, ein beliebiges Bild oder einen Teilbereich eines Bildes handeln.

Die digitale Rastergrafik wird mittels geeigneter Software gescannt, also "abgetastet", wodurch die lokalen Graustufen der Rastergrafik, also die Graustufen der Pixel, entsprechend ermittelt und gespeichert werden.

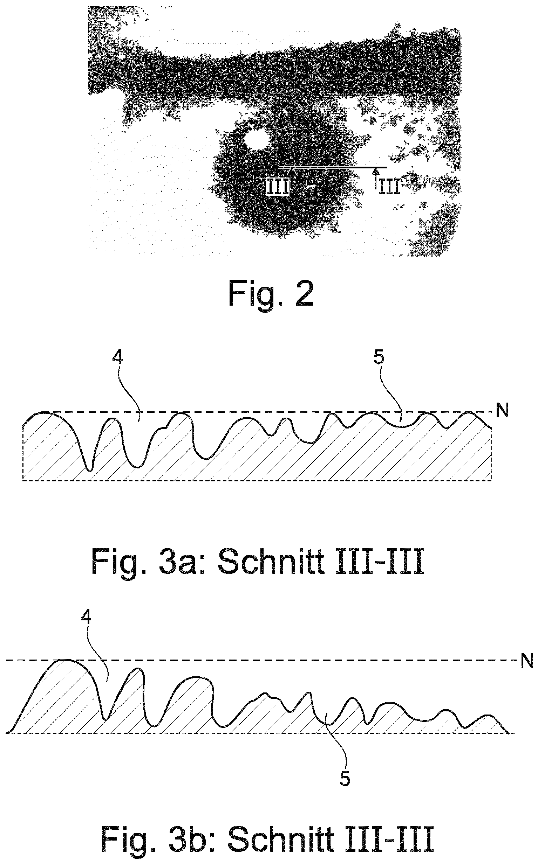

Die in den Flächenelementen 3 der Fig. 1 eingeprägten Darstellungen stammen bevorzugt von einer Lasergravur an der entsprechenden Seitenwandschale der Vulkanisationsform. Fig. 2 zeigt eine stark vergrößerte Ansicht eines Ausschnittes eines Beispiels einer Lasergravur an der Innenfläche der Seitenwandschale. Zur Veranschaulichung sind tiefer ausgeführte Bereiche der Lasergravur schwarz bzw. dunkel und gegenüber tieferen Bereichen seichter ausgeführte Bereiche weiß bzw. hell dargestellt.

Jeder Graustufe ist eine definierte Laserenergie für die Lasergravur zugeordnet. Mittels der Software wird den einzelnen Pixeln der abgetasteten Rastergrafik eine mit ihrer jeweiligen Graustufe korrelierende Laserenergie zugeordnet. Der die Lasergravur erstellende Laser, welcher ebenfalls mit einer geeigneten Software gesteuert wird, erstellt auf der Innenfläche des Formteils eine flächendeckende, weitgehend ungleichmäßige Berg- und Tal-Kontraststruktur, wobei in Abhängigkeit der verwendeten Darstellung einzelne Teilbereiche gegebenenfalls nicht graviert werden.

Gemäß einer ersten Variante ist die zugeordnete Laserenergie umso größer je dunkler die Graustufe ist. Insbesondere wird der in der Rastergrafik jeweils vorhandenen dunkelsten Graustufe eine derart hohe Laserenergie zugeordnet, dass nachfolgend an der Innenfläche des Formteiles eine Lasergravur mit einer Tiefe von maximal 0,5 mm erzeugt wird. Insbesondere kann der Laser derart gesteuert werden, dass er bei der dunkelsten Graustufe mit maximaler Laserenergie graviert. Fig. 3a zeigt einen schematischen Schnitt entlang der Linie III-III der Fig. 2, wobei das Basisniveau N der Innenfläche des Formteiles durch eine waagrechte, gestrichelte Linie angedeutet ist. Die ungleichmäßige Berg- und Tal-Kontraststruktur ergibt sich aus den in unterschiedlichen Graustufen vorhandenen Pixeln der Rastergrafik (lokale Graustufen) und den daraus resultierenden unterschiedlichen Laserenergien. Der Laser erzeugt Vertiefungen 4, 5, welche sich in ihrer Tiefe, Größe, Volumen etc. unterscheiden. Beispielsweise weist die erstellte Lasergravur an einer Stelle der korrespondierenden Rastergrafik, an welcher ein oder mehrere Pixel mit helleren Graustufen von mehreren Pixeln mit dunkleren Graustufen umgeben ist bzw. sind, eine niedrigere Vertiefung 4, 5 auf, welche von etwas tieferen Vertiefungen 4, 5 ringartig umgeben ist. Fig. 2 verdeutlicht in Kombination mit Fig. 3a dieses Prinzip. In Fig. 3a sind im Bereich der linken Hälfte die mit den Pixeln dunkler Graustufen korrelierenden, tiefer ausgeführten Vertiefungen 4 zu sehen. In der rechten Hälfte sind die mit den Pixeln heller Graustufen korrelierenden, gegenüber den Vertiefungen 4 seichter ausgeführten Vertiefungen 5 zu erkennen.

Fig. 3b zeigt in einem weiteren, zu Fig. 3a analogen, schematischen Schnitt eine zweite Variante der Lasergravur. Das Basisniveau der Innenfläche des Formteiles ist wieder mit N bezeichnet. Wie Fig. 2 in Kombination mit Fig. 3b zeigt, werden bei dieser Variante im Bereich der Pixel heller Graustufen gegenüber dem Basisniveau N der Innenfläche deutlich mehr Material von der Innenfläche des Formteiles abgetragen als im Bereich der Pixel dunklerer Graustufen. Die aus den Pixeln heller Graustufen resultierenden Vertiefungen 5 sind wieder seichter ausgeführt als die aus den Pixeln dunkler Graustufen resultierenden tiefer ausgeführten Vertiefungen 4. Die Vertiefungen 5 sind also weiterhin seichter als die Vertiefungen 4, wobei sie jedoch gegenüber dem Basisniveau N der Innenfläche abgesenkt ausgebildet sind.

Im Hinblick auf die an der Innenfläche des Formteils ausgebildete ungleichmäßige Berg- und Talstruktur ist vor allem die jeweils lokale flächenbezogene Rauheit der Berg- und Talstruktur entscheidend. In Fig. 3a und Fig. 3b weist der mit den tieferen Vertiefungen 4 versehene linke Bereich einen größeren flächenbezogener Rauheitswert (EN ISO 25178) auf als der mit den seichteren Vertiefungen 5 versehene rechte Bereich.

Der vulkanisierte Fahrzeugluftreifen weist somit auf der betreffenden Seitenwand im Gummimaterial pro Flächenelement 3 eine dreidimensionalen Berg- und Tal-Kontraststruktur auf, welche dem Positiv der lasergravierten Berg- und Tal-Kontraststruktur in der Seitenwandschale entspricht. Die dreidimensionale Berg- und Tal-Kontraststruktur auf der Seitenwand gibt daher die der Rastergrafik zugrundeliegende fotographische Darstellung oder eine sonstige Abbildung sehr realitätsnah wieder und ist infolge der variierenden Lichtabsorptions- und Lichtreflexionseigenschaften der Berg- und Tal- Kontraststruktur auch besonders gut erkennbar.

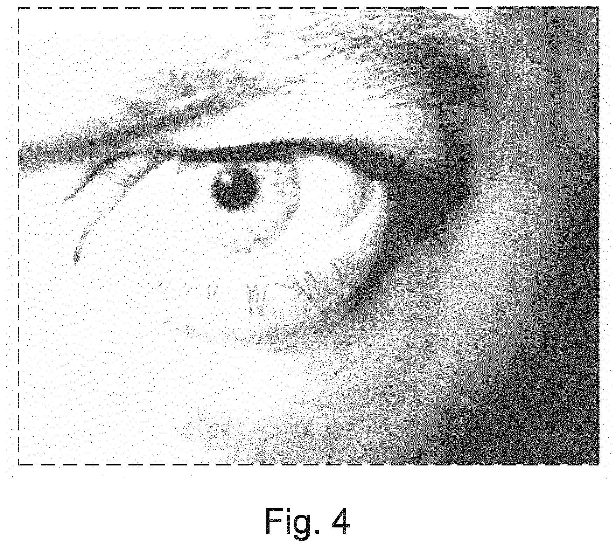

Fig. 4 zeigt ein Beispiel für eine fotographische Schwarz-Weiß-Darstellung, deren zugehörige Rastergrafik als korrespondierende Lasergravur auf eine Seitenwand eines Fahrzeugluftreifens mittels des beschriebenen Verfahrens übertragen werden könnte.

Die Erfindung ist auf die beschriebenen Ausführungsbeispiele nicht beschränkt.

Die Vulkanisationsform kann auf der Innenfläche eines beliebigen Formteils, insbesondere eines Segments eines den profilierten Laufstreifen eines Fahrzeugluftreifens ausformenden Segmentringes, mit einer ein Bild und dergleichen wiedergebenden Lasergravur versehen werden. Auf diese Weise können auch die Schulterflanken des Laufstreifens und auch der Laufstreifen selbst bildlich gestaltet werden, wobei Abbildungen am Laufstreifen durch Abrieb beim Gebrauch des Reifens relativ bald verschwinden. Beispielsweise kann die dreidimensionale Berg- und Tal- Kontraststruktur als ein am neuen Reifen in Umfangsrichtung umlaufender Streifen mit bildlichen Darstellungen oder bildhaften Mustern ausgeführt sein.

Die beschriebenen Verfahrensschritte können nacheinander oder auch zumindest teilweise gleichzeitig durchgeführt werden.

### Bezugszeichenliste

- 1: Laufstreifen
- 2: Seitenwand
- 3: Flächenelement
- 4, 5: Vertiefung
- N: Basisniveau

## Patentansprüche

1. Verfahren zum Erstellen einer Gravur mittels Laser auf der Innenfläche eines Formteiles einer Vulkanisationsform eines Fahrzeugluftreifens auf Basis einer digitalen Rastergrafik aus Pixeln mit einer Vielzahl von, insbesondere zumindest 256, unterschiedlichen Graustufen, wobei die lokale Laserenergie mit den Graustufen der Pixel aus der Rastergrafik korreliert, mit folgenden nacheinander und gegebenenfalls auch parallel zueinander ablaufenden Schritten:
a. Abtasten der digitalen Rastergrafik zur Ermittlung der Graustufe jedes Pixels,
b. Gravieren der Innenfläche des Formteils,
**dadurch gekennzeichnet,**
**dass** in Schritt a. als Rastergrafik ein Digitalfoto mit einer Bildgröße von zumindest 1000 × 1000 Pixel verwendet wird,
wobei in Schritt b. die Gravur mit den Graustufen der Pixel des Digitalfotos derart korreliert, dass diese als ungleichmäßige, die Graustufen abbildende Berg- und Tal-Kontraststruktur auf der Innenfläche des Formteils wiedergegeben wird.

2. Verfahren nach Anspruch 1, **dadurch gekennzeichnet, dass** in Schritt b. die Gravur von einem konstanten Basisniveau (N) ausgehend erstellt wird, wobei die Berg- und Tal- Kontraststruktur oberhalb und/oder unterhalb des Basisniveaus (N) ausgebildet wird.

3. Verfahren nach Anspruch 1 oder 2, **dadurch gekennzeichnet, dass** in Schritt b. eine Lasergravur mit einer Tiefe von maximal 0,5 mm erstellt wird.

4. Verfahren nach einem der Ansprüche 1 bis 3, **dadurch gekennzeichnet, dass** der lokale flächenbezogene Rauheitswert gemäß EN ISO 25178 der ungleichmäßigen Berg- und Tal- Kontraststruktur umso größer ist, je dunkler die Graustufe der Rastergrafik ist.

## Claims

1. Method for producing an engraving by means of a laser on the inner surface of a mould part of a vulcanization mould of a pneumatic motor vehicle tyre on the basis of a digital bit-mapped graphic of pixels with a multiplicity of, in particular at least 256, different grey scales, wherein the local laser energy correlates with the grey scales of the pixels from the bit-mapped graphic, comprising the following steps, occurring one after the other and possibly also in parallel with one another:
a. scanning the digital bit-mapped graphic to ascertain the grey scale of each pixel,
b. engraving the inner surface of the mould part,
**characterized in that**,
in step a., a digital photo with an image size of at least 1000 × 1000 pixels is used as the bit-mapped graphic,
wherein, in step b., the engraving correlates with the grey scales of the pixels of the digital photo in such a way that it is reproduced on the inner surface of the mould part as an uneven contrasting structure of peaks and troughs replicating the grey scales.

2. Method according to Claim 1, **characterized in that**, in step b., the engraving is produced from a constant base level (N), wherein the contrasting structure of peaks and troughs is formed above and/or below the base level (N).

3. Method according to Claim 1 or 2, **characterized in that**, in step b., a laser engraving is produced with a maximum depth of 0.5 mm.

4. Method according to one of Claims 1 to 3, **characterized in that** the local area-related roughness value according to EN ISO 25178 of the uneven contrasting structure of peaks and troughs is all the greater the darker the grey scale of the bit-mapped graphic is.

## Revendications

1. Procédé de création d'une gravure au moyen d'un laser sur la surface intérieure d'une pièce moulée d'un moule de vulcanisation d'un pneumatique de véhicule à partir d'un graphisme tramé numérique composé de pixels et comprenant un grand nombre de niveaux de gris différents, notamment au moins 256, l'énergie laser locale étant corrélée aux niveaux de gris des pixels du graphique tramé, ledit procédé comprenant les étapes suivantes, qui se déroulent l'une après l'autre et éventuellement également en parallèle :
a. analyser par balayage le graphique tramé numérique pour déterminer le niveau de gris de chaque pixel,
b. graver la surface intérieure de la pièce moulée,
**caractérisé en ce que**
à l'étape a. une photo numérique ayant une taille d'image d'au moins 1000 × 1000 pixels est utilisée comme graphique tramé,
à l'étape b. la gravure est corrélée aux niveaux de gris des pixels de la photo numérique de manière à reproduire celle-ci sur la surface intérieure de la pièce moulée sous la forme d'une structure de contraste irrégulière à crêtes et vallées représentant les niveaux de gris.

2. Procédé selon la revendication 1, **caractérisé en ce que**, à l'étape b., la gravure est réalisée à partir d'un niveau de base constant (N), la structure de contraste à crêtes et vallées étant formée au-dessus et/ou au-dessous du niveau de base (N).

3. Procédé selon la revendication 1 ou 2, **caractérisé en ce que**, à l'étape b., une gravure laser d'une profondeur maximale de 0,5 mm est réalisée.

4. Procédé selon l'une des revendications 1 à 3, **caractérisé en ce que** la valeur de rugosité de surface locale selon EN ISO 25178 de la structure de contraste irrégulière à crêtes et vallées est d'autant plus grande que le niveau de gris du graphique tramé est foncé.
